# EUROPÄISCHE PATENTSCHRIFT

(11) **EP 1 381 854 B1**
(45) Veröffentlichungstag und Bekanntmachung des Hinweises auf die Patenterteilung: **21.12.2005**
(21) Anmeldenummer: 02737815.7
(22) Anmeldetag: 23.04.2002
(51) Int. Cl.: G01N 27/18, G01N 25/18

(54) **WÄRMELEITFÄHIGKEITSDETEKTOR**
HEAT CONDUCTIVITY DETECTOR
DETECTEUR PAR CONDUCTIVITE THERMIQUE

(30) Priorität: 23.04.2001 DE 10119788
(43) Veröffentlichungstag der Anmeldung: 21.01.2004
(73) Patentinhaber: SIEMENS AKTIENGESELLSCHAFT, 80333 München (DE)
(72) Erfinder: GELLERT, Udo, 76756 Bellheim (DE)
(86) Internationale Anmeldenummer: PCT/DE2002/001488
(87) Internationale Veröffentlichungsnummer: WO 2002/086482

(56) Entgegenhaltungen:
- DE-A- 19 808 681
- GB-A- 1 024 869
- US-A- 3 777 366
- US-A- 3 888 110
- PATENT ABSTRACTS OF JAPAN vol. 1998, no. 10, 31. August 1998 (1998-08-31) & JP 10 142212 A (YOKOGAWA ELECTRIC CORP), 29. Mai 1998 (1998-05-29)

## Beschreibung

Wärmeleitfähigkeitsdetektoren dienen zum Nachweis bestimmter flüssiger oder gasförmiger Stoffe (Fluide) anhand ihrer stofftypischen Wärmeleitfähigkeit und werden insbesondere in der Gaschromatographie eingesetzt. Dazu werden die nachzuweisenden Stoffe nach ihrer chromatographischen Trennung nacheinander in einem Kanal an einem dort angeordneten und elektrisch beheizten Heizfaden vorbeigeführt, wobei je nach Wärmeleitfähigkeit des vorbeiströmenden Stoffes mehr oder weniger Wärme von dem Heizfaden auf die Kanalwandung abgeleitet wird und der Heizfaden dementsprechend mehr oder weniger abkühlt. Durch die Abkühlung des Heizfadens ändert sich dessen elektrischer Widerstand, was detektiert wird. Dazu ist der Heizfaden üblicherweise in einer Messbrücke angeordnet, die weitere Widerstände und einen weiteren Heizfaden in einem von einem Referenzfluid durchströmten weiteren Kanal enthält.

Um geringste Stoffmengen mit hoher Sensitivität und Genauigkeit nachweisen zu können, ist ein entsprechend kleiner Aufbau des Wärmeleitfähigkeitsdetektors erforderlich. Dazu bieten sich insbesondere mikromechanische Herstellungsverfahren an. Bedingt durch die geringe Baugröße können jedoch spezielle Probleme entstehen. So kann der bei Umgebungstemperatur unter Zug stehende Heizfaden bei Arbeitstemperaturen zwischen 100 °C und 200 °C oder höher aufgrund seiner Wärmeausdehnung erschlaffen; das den Kanal durchströmende Fluid kann dann den Heizfaden zu Schwingungen anregen, die das Detektorrauschen des Wärmeleitfähigkeitsdetektors erhöhen und damit die Nachweisgrenze herabsetzen und die auch zu einem vorzeitigen Bruch des sehr dünnen Heizfadens führen können.

Gemäß der Erfindung erfolgt die Vermeidung dieser Probleme durch einen Wärmeleitfähigkeitsdetektor mit einem elektrisch beheizbaren Heizfaden, der in der Mitte eines Kanals von einem Fluid umströmbar gelagert ist und dazu an seinen beiden Enden an zwei den Kanal durchquerenden elektrisch leitenden Trägern gehalten ist, wobei mindestens einer der beiden Träger derart ausgebildet ist, dass sein Abstand zu dem anderen Träger im Bereich der Kanalmitte größer ist als im Bereich der Kanalwandung.

Durch die spezielle Ausbildung des mindestens einen Trägers, vorzugsweise beider Träger, wird erreicht, dass sich bei zunehmender Temperatur die mittleren Bereiche der beiden Träger, an denen der Heizfaden mit seinen beiden Enden gehalten ist, im Sinne einer Straffung des Heizfadens voneinander weg bewegen. Der Heizfaden verbleibt dabei in vorteilhafter Weise in der Mitte des Kanals, so dass sich die Messeigenschaften des Wärmeleitfähigkeitsdetektors nicht ändern.

Besonders effektiv wird der Erschlaffung des Heizfadens bei Temperaturerhöhung dadurch entgegengewirkt, dass der mindestens eine Träger in seinem den Kanal durchquerenden Bereich zumindest annähernd V-förmig ausgebildet ist.

Um bei dem mindestens einen Träger eine möglichst große Wärmeausdehnung zur Straffung des Heizfadens zu erreichen, besteht der betreffende Träger bevorzugt ausschließlich aus Metall; d. h. es wird z. B. für den Träger kein Trägersubstrat aus einem Material mit geringer Wärmeausdehnung, wie Siliziumdioxid, mit einer darauf aufgebrachten leitfähigen Schicht verwendet.

Da es in der Praxis kaum möglich ist, die wärmebedingte Längenausdehnung des Heizfadens vollständig durch die Wärmeausdehnung der erfindungsgemäß ausgebildeten Träger zu kompensieren, ist der unbeheizte Heizfaden vorzugsweise unter einer derartigen Zugspannung zwischen den beiden Trägern gehalten, dass der Heizfaden auch bei Arbeitstemperatur noch mit einem Zug belastet ist. Dies wäre bei Trägern ohne die erfindungsgemäße Ausformung nicht möglich, da dann die Zugspannung des unbeheizten Heizfadens derart hoch eingestellt sein müsste, dass der Heizfaden reißen würde oder anderenfalls stabiler und damit dicker ausgebildet werden müsste.

Insbesondere im Hinblick auf eine mikromechanische Herstellung des erfindungsgemäßen Wärmeleitfähigkeitsdetektors sind die den Heizfaden haltenden Träger vorzugsweise auf einer Trägerplatte mit einer darin enthaltenen Rinne ausgebildet, wobei der Kanal von der Rinne und einer weiteren Rinne in einer auf der Trägerplatte aufliegenden Abdeckplatte gebildet ist.

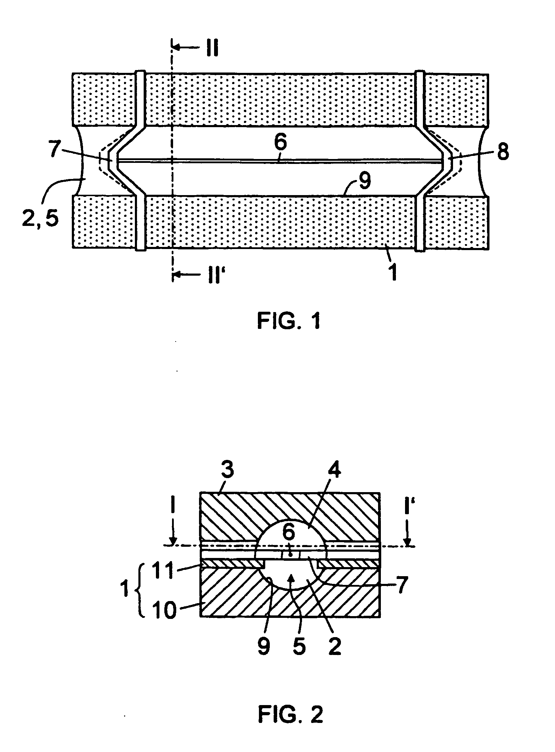

Im Weiteren wird die Erfindung anhand eines in den Figuren gezeigten Ausführungsbeispiels des erfindungsgemäßen Wärmeleitfähigkeitsdetektors erläutert, wobei
- Figur 1: den Wärmeleitfähigkeitsdetektor im Längsschnitt (I-I') und
- Figur 2: denselben Wärmeleitfähigkeitsdetektor im Querschnitt (II-II') zeigen.

Auf einer Trägerplatte 1 mit einer darin enthaltenen Rinne 2 liegt eine Abdeckplatte 3 mit einer weiteren Rinne 4 derart auf, dass beide Rinnen 2 und 4 zusammen einen Kanal 5 mit hier kreisrundem Querschnitt bilden. In der Mitte des Kanals 5 erstreckt sich in dessen Längsrichtung ein Heizfaden 6, der an seinen beiden Enden an zwei den Kanal 5 durchquerenden elektrisch leitenden Trägern 7 und 8 gehalten ist. Jeder der beiden Träger 7 und 8 ist jeweils so ausgebildet, dass sein Abstand zu dem jeweils anderen Träger im Bereich der Mitte des Kanals 5, also dort, wo der Heizfaden 6 gehalten ist, größer ist als im Bereich der Kanalwandung 9. Dazu sind die beiden Träger 7 und 8 hier in ihren den Kanal 5 durchquerenden Bereichen im Wesentlichen V-förmig ausgebildet, wobei die beiden Schenkel jedes V-förmigen Trägers 7 und 8 in einem Winkel von etwa 45° zu der Kanalwandung 9 verlaufen.

Der Heizfaden 6 wird in unbeheiztem Zustand unter einer voreingestellten Zugspannung zwischen den Trägern 7 und 8 gehalten. Zum Aufheizen des Heizfadens 6 wird dieser über die beiden Träger 7 und 8 mit einem elektrischen Strom beaufschlagt. Die dabei aus der wärmebedingten Längenausdehnung des Heizfadens 6 resultierende Zugspannungsminderung wird teilweise dadurch kompensiert, dass sich mit zunehmender Temperatur auch die mittleren Bereiche der beiden Träger 7 und 8, an denen der Heizfaden 6 gehalten ist, im Sinne einer Straffung des Heizfadens 6 voneinander weg bewegen (vgl. gestrichelte Darstellung). Die Zugspannung des unbeheizten Heizfadens 6 ist so eingestellt, dass der Heizfaden 6 bei Arbeitstemperatur, also im Bereich zwischen 100 °C und 200 °C, noch unter einer Zugspannung ≥ 0 steht, d. h. nicht erschlafft, wobei aber der voreingestellte Zugspannungswert des unbeheizten Heizfadens 6 um den Betrag der Kompensation der Zugspannungsminderung niedriger sein kann. Bei einer Kompensation der Zugspannungsminderung des aufgeheizten Heizfadens 6 um 40 % müssen nur noch die verbleibenden 60 % bei der Einstellung der Zugspannung des unbeheizten Heizfadens 6 ausgeglichen werden.

Zur mikromechanischen Herstellung des Wärmeleitfähigkeitsdetektors wird zunächst die Trägerplatte 1 aus einem Siliziumsubstrat 10 gebildet, das auf einer Seite eine Isolierschicht 11 aus Siliziumdioxid trägt. Auf der Isolierschicht 11 werden anschließend Metallschichten (z. B. Titan, Chrom, Platin, Gold) aufgebracht, die zu einem Teil (Gold und/oder Platin) später die Träger 7 und 8 und den Heizfaden 6 bilden und zum anderen Teil als Haftvermittler (Titan, Chrom) oder zur Verstärkung (Gold) von Schichten dienen. In Atzprozessen werden durch Strukturieren der Metallschichten die Träger 7 und 8 und der Heizfaden 6 gebildet und die Rinne 2 in der Trägerplatte 1 ausgeformt. Bei der Ausbildung der Träger 7 und 8 wird auf ein Verbleiben der Isolierschicht 11 als Unterstützung für die Träger 7 und 8 so weit wie möglich verzichtet, so dass diese nur aus Metall bestehen und sich daher beim Aufheizen ungehindert ausdehnen können. Schließlich werden die Trägerplatte 1 und die Abdeckplatte 3 zusammengefügt, wobei die in ihnen ausgeformten Rinnen 2 und 4 den Kanal 5 bilden. Der Kanaldurchmesser beträgt etwa 0,15 mm, die Heizfadenlänge etwa 1 mm und der Heizfadendurchmesser < 1 µm.

## Patentansprüche

1. Wärmeleitfähigkeitsdetektor mit einem elektrisch beheizbaren Heizfaden (6), der in der Mitte eines Kanals (5) von einem Fluid umströmbar gelagert ist und dazu an seinen beiden Enden an zwei den Kanal (5) durchquerenden elektrisch leitenden Trägern (7, 8) gehalten ist, wobei mindestens einer der beiden Träger (z. B. 7) derart ausgebildet ist, dass sein Abstand zu dem anderen Träger (8) im Bereich der Kanalmitte größer ist als im Bereich der Kanalwandung (9).

2. Wärmeleitfähigkeitsdetektor nach Anspruch 1, **dadurch gekennzeichnet , dass** der mindestens eine Träger (7, 8) in seinem den Kanal (5) durchquerenden Bereich zumindest annähernd V-förmig ausgebildet ist.

3. Wärmeleitfähigkeitsdetektor nach Anspruch 1 oder 2, **da**- **durch gekennzeichnet** , dass der mindestens eine Träger (7, 8) ausschließlich aus Metall besteht.

4. Wärmeleitfähigkeitsdetektor nach einem der vorangehenden Ansprüche, **dadurch gekennzeichnet, dass** der unbeheizte Heizfaden (6) unter einer derartigen Zugspannung zwischen den beiden Trägern (7, 8) gehalten ist, dass er auch bei Arbeitstemperatur noch mit Zug belastet ist.

5. Wärmeleitfähigkeitsdetektor nach einem der vorangehenden Ansprüche, **dadurch gekennzeichnet, dass** die den Heizfaden (6) haltenden Träger (7, 8) vorzugsweise auf einer Trägerplatte (1) mit einer darin enthaltenen Rinne (2) ausgebildet sind, wobei der Kanal (5) von der Rinne (2) und einer weiteren Rinne (4) in einer auf der Trägerplatte (1) aufliegenden Abdeckplatte (3) gebildet ist.

## Claims

1. Thermal conductivity detector comprising an electrically heatable heating filament (6), which is mounted in a central region of the channel (5) so a fluid in the channel flows around the filament, and is held at ends of the filament on the two electrically conductive carriers (7,8), wherein at least one of the two carriers (e.g.7) is configured such that a minimum distance to the other carrier (8) is larger in the central region of the channel than in a region nearer to the channel wall (9).

2. Thermal conductivity detector according to claim 1, **characterised in that** the at least one carrier (7,8) has an at least approximately V-shaped section within the channel.

3. Thermal conductivity detector according to claim 1 or 2, **characterised in that** the at least one carrier (7, 8) consists essentially of metal.

4. Thermal conductivity detector according to claim 1, **characterised in that** unheated heating filament (6) is held under tension between the two carriers (7,8), and remains under tension at an operating temperature of the detector.

5. Thermal conductivity detector according to one of the preceding claims, **characterised in that** the carriers (7,8) holding the heating filament (6) are preferably configured on a carrier plate (1) with a groove contained therein, the channel 5 being formed by a groove (2) and a further groove (4) in a cover plate (3) positioned on the carrier plate (1).

## Revendications

1. Détecteur par conductivité thermique comprenant un filament (6) de chauffage qui peut être chauffé électriquement, qui est monté au milieu d'un canal (5) et autour duquel peut passer un fluide et qui est maintenu à cet effet à ses deux extrémités sur deux supports (7, 8) conducteurs de l'électricité traversant transversalement le canal (5), au moins l'un des deux supports (par exemple 7) étant tel que sa distance à l'autre support (8) est plus grande dans la zone du milieu du canal que dans la zone de la paroi (9) du canal.

2. Détecteur par conductivité thermique suivant la revendication 1, **caractérisé en ce que** le au moins un support (7, 8) est au moins à peu près en forme de V dans sa zone traversant transversalement le canal (5).

3. Détecteur par conductivité thermique suivant la revendication 1 ou 2, **caractérisé en ce que** le au moins un support (7, 8) est exclusivement en métal.

4. Détecteur par conductivité thermique suivant l'une des revendications précédentes, **caractérisé en ce que** le filament (6) de chauffage non chauffé est maintenu sous une contrainte de traction entre les deux supports (7, 8), de sorte qu'il est encore chargé en traction même à la température de travail.

5. Détecteur par conductivité thermique suivant l'une des revendications précédentes, **caractérisé en ce que** les supports (7, 8) maintenant le filament (6) de chauffage sont constitués, de préférence, sur un plateau (1) de support ayant une rainure (2) en son sein, le canal (5) étant formé par la rainure (2) et par une autre rainure (4) ménagée dans un plateau (3) de couvercle reposant sur le plateau (1) support.
